Europäisches Patentamt

European Patent Office

Office européen des brevets

(11) Numéro de publication: **0 277 451**

A1

## (12) DEMANDE DE BREVET EUROPEEN

(21) Numéro de dépôt: 87430037.9

(51) Int. Cl.⁴: **H04N 5/74 , H04N 7/16**

(22) Date de dépôt: **18.12.87**

(30) Priorité: 09.01.87 FR 8700235

(43) Date de publication de la demande:
**10.08.88 Bulletin 88/32**

(84) Etats contractants désignés:
**AT BE CH DE ES GB IT LI**

(71) Demandeur: **SARL VIDEOSTONE
ELECTRONIQUE
225, Av. du Président Wilson
F-93210 La Plaine St. Denis(FR)**

Demandeur: **Rouart, Andrée
Le Fief du Chataîgnier
F-85400 Lairoux-par-Lussan(FR)**

Demandeur: **Domagala, Peter
286 Georges Dye Road
Trenton New Jersey 08690(US)**

Demandeur: **Verrier, Robert
44, rue des Abbesses
F-75018 Paris(FR)**

(72) Inventeur: **Rouart, Andrée
Le Fief du Chataîgnier
F-85400 Lairoux-par-Lussan(FR)**
Inventeur: **Domagala, Peter
286 Georges Dye Road
Trenton New Jersey 08690(US)**
Inventeur: **Verrier, Robert
44, rue des Abbesses
F-75018 Paris(FR)**

(74) Mandataire: **Azais, Henri et al
c/o CABINET BEAU DE LOMENIE 14, rue
Raphael
F-13008 Marseille(FR)**

(54) **Procédés et dispositifs pour projeter des programmes de télévision sur un écran d'une salle de spectacle.**

(57) Un dispositif selon l'invention comporte un vidéo projecteur qui est suspendu au plafond d'une salle de spectacle face à un écran. Le boîtier (6) du vidéo-projecteur contient, de façon connue, un décodeur (7), trois ou quatre tubes cathodiques ($9_1$, $9_2$, $9_3$) et trois objectifs ($10_1$, $10_2$, $10_3$). Il contient, en outre, un décrypteur (11) et un commutateur (13). Ce dispositif comporte, en outre, une source de programmes vidéo (18) qui est placée dans un local technique accessible et un boîtier de télécommande (25) muni d'un clavier qui est relié au commutateur (13) et qui permet d'envoyer un code au décrypteur.

Fig. 2

1a

## Procédés et dispositifs pour projeter des programmes de télévision sur un écran d'une salle de spectacle.

La présente invention a pour objet des procédés et des dispositifs pour projeter des programmes de télévision sur un écran d'une salle de spectacle.

Le secteur technique de l'invention est celui de la construction des appareils de vidéo-projection.

On connaît des appareils dits vidéo-projecteurs qui permettent de projeter une image vidéo en couleurs sur un écran de grandes dimensions placé dans une salle de projection, de sorte que de nombreux spectateurs rassemblés dans la salle peuvent assister à une émission de télévision.

Les vidéo-projecteurs en couleurs connus à ce jour comportent par exemple plusieurs tubes cathodiques colorés respectivement en rouge, vert et bleu, de sorte qu'une image dans une des trois couleurs fondamentales se forme sur l'écran de chaque tube à partir du signal vidéo de chrominance correspondant à chaque couleur fondamentale.

Ils comportent des objectifs placés en avant de chacun des écrans des tubes cathodiques qui projettent les images sur un écran de grande dimension, sur lequel les images correspondant aux trois couleurs fondamentales se superposent pour reconstituer les couleurs.

Les vidéo-projecteurs connus peuvent comporter un tube cathodique pour les images rouges et bleues et deux tubes cathodiques pour les images vertes.

Les vidéo-projecteurs connus à ce jour peuvent être suspendus au plafond de la salle de projection en regard de l'écran.

L'avènement des transmissions par satellites et des antennes pouvant capter les émissions vidéo retransmises par ces satellites tend à accroître considérablement les possibilités de vidéo projection pour permettre à des publics de plus en plus nombreux de suivre en direct des transmissions vidéo d'évènements importants ayant lieu en n'importe quel point du globe terrestre par exemple de suivre un concert, un évènement sportif, une retransmission d'un fait marquant d'actualité, un voyage d'une personnalité importante etc... ou d'assister à une retransmission publique d'un spectacle de cinéma, de théâtre, de music-hall etc...

Toutefois les entreprises qui diffusent les émissions de télévision, notamment les émissions par satellites, exigent d'être payées par les téléspectateurs pour récupérer leurs frais et pour faire des profits et on sait que ce but est atteint par un brouillage des signaux vidéo et audio appelé cryptage et par la diffusion à ceux qui ont payé une redevance d'un code de décryptage qui leur permet de supprimer le brouillage et de recevoir l'image et le son.

A ce jour, les responsables des entreprises qui diffusent des programmes de télévision payants et brouillés sont très réticents à accepter comme clients les exploitants de salles de vidéo-projection sur écran.

Ils objectent que s'ils communiquent le code de décryptage à un exploitant d'une salle de vidéo-projection, celui-ci pourra pirater l'émission en faisant des copies de l'émission une fois décryptée sur une cassette vidéo ou sur un vidéo disque pour revendre ensuite les enregistrements et/ou pour faire de nouvelles projections publiques en échappant aux redevances.

Le problème à résoudre est de procurer des moyens de vidéo projection des émissions de télévision cryptées en évitant les possibilités de copies frauduleuses de celles-ci une fois qu'elles ont été décryptées.

Bien entendu, les dispositifs de vidéo-projection selon l'invention doivent permettre de projeter sur un écran non seulement des émissions de télévision décryptées, mais également des émissions qui n'ont pas été brouillées.

La solution à ce problème est fournie par un procédé de vidéo-projection suivant lequel on dispose un décrypteur à l'intérieur du boîtier d'un vidéo-projecteur, de sorte que les signaux audio et vidéo décryptés vont directement au décodeur qui fait partie du vidéo-projecteur et ne peuvent être utilisés pour faire des copies. Par contre, la source de signaux vidéo et audio et un boîtier de télécommande du décrypteur sont disposés dans un entroit accessible.

Un dispositif selon l'invention est destiné à effectuer des vidéo-projections dans une salle de projection équipée d'un écran de projection et il comporte, de façon connue, une source vidéo et un vidéo-projecteur.

Un dispositif selon l'invention est caractérisé par le fait que le vidéo-projecteur comporte un décrypteur vidéo et audio qui est placé à l'intérieur du boîtier dudit vidéo-projecteur, lequel peut être scellé.

Avantageusement, un vidéo-projecteur selon l'invention comporte, en outre, un commutateur automatique qui est associé audit décrypteur et sur lequel deux lignes provenant des sorties audio et vidéo de ladite source vidéo sont connectées.

Avantageusement, un dispositif selon l'invention comporte un boîtier de télécommande, équipé d'un clavier permettant de composer les codes de décryptage, lequel boîtier est situé dans un local accessible éloigné dudit vidéo-projecteur et est relié à celui-ci par un câble ou par une liaison par ondes porteuses ultrasonores, herziennes ou infrarouges.

Selon un mode de réalisation préférentiel, la source de programme de télévision est connectée sur un amplificateur-tampon dont la sortie est connecté audit commutateur et la sortie audio dudit décrypteur est connectée sur un préamplificateur qui est logé dans le boîtier dudit vidéo-projecteur et la sortie dudit préamplificateur est connectée par une ligne à un amplificateur de puissance qui alimente les haut-parleurs de la salle et qui est logé dans ledit local.

L'invention a pour résultat de nouveaux dispositifs de vidéo-projection d'émission vidéo dans des salles de spectacle qui permettent de projeter sur un écran des émissions vidéo après les avoir décryptées en évitant les possibilités de copie de l'émission après qu'elle a été décryptée.

La description suivante se réfère aux dessins annexés qui représentent, sans aucun caractère limitatif, un exemple de réalisation d'un dispositif selon l'invention.

La figure 1 est une vue d'ensemble très - schématique d'une salle de spectacle équipée d'un dispositif de vidéo-projection selon l'invention.

La figure 2 est un schéma des composants et des liaisons d'un dispositif selon l'invention.

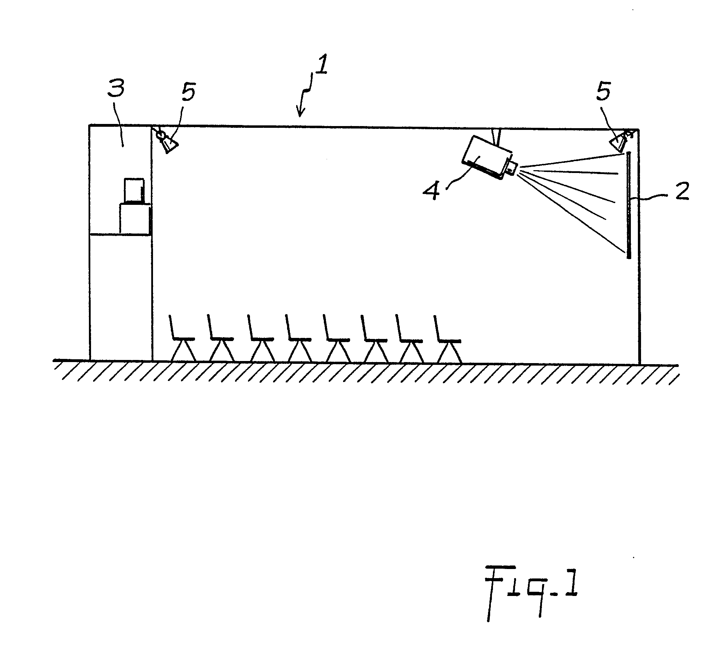

La figure 1 représente une salle de spectacle 1 équipée d'un écran 2 de grandes dimensions par exemple une salle de cinéma ayant plusieurs dizaines de mètres de long.

Cette salle de spectacle comporte à l'arrière, un local technique 3, appelé cabine de projection, du fait qu'il contient les appareils de projection cinématographiques placés en face de l'écran 2.

Les vidéo-projecteurs sont des appareils connus qui permettent de projeter sur un écran de grandes dimensions des images vidéo. La salle 1 est équipée de haut-parleurs 5 qui diffusent dans la salle le son accompagnant les images cinématographiques ou vidéo.

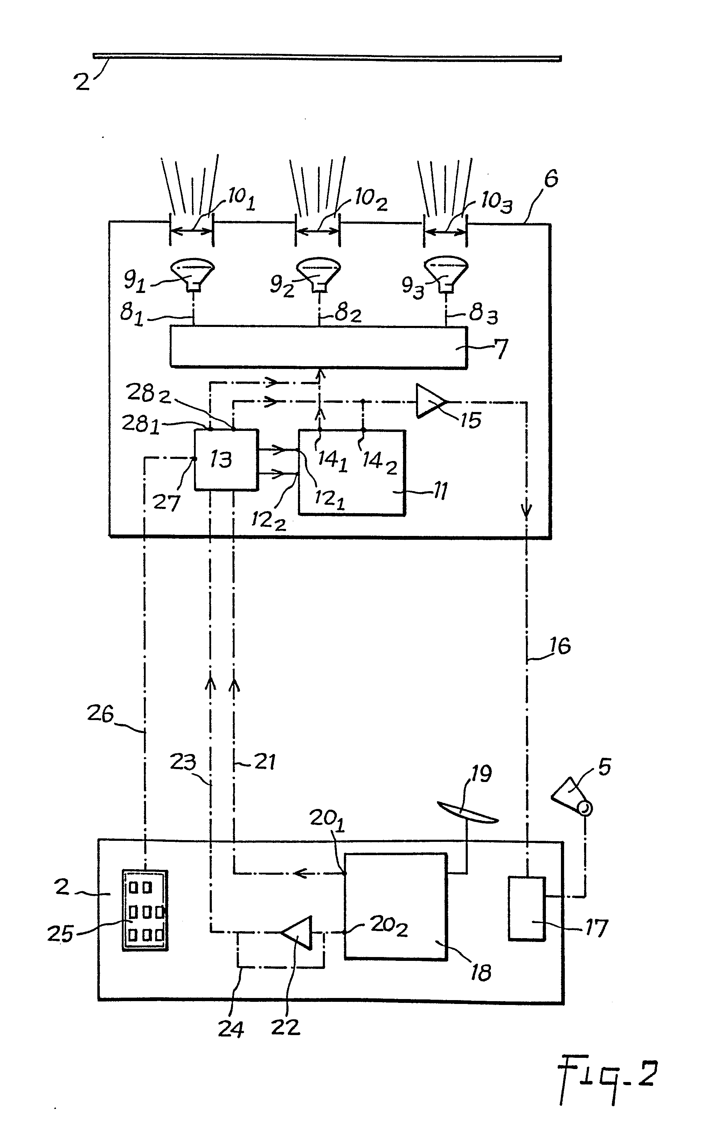

La figure 2 représente le boîtier 6 d'un vidéo-projecteur destiné à projeter sur un écran des images vidéo en couleurs. Ce vidéo-projecteur comporte, de façon connue, un décodeur vidéo 7 qui reçoit le signal vidéo multiplexé, c'est-à-dire le signal global de luminance et de chrominance et qui comporte trois sorties $8_1$, $8_2$ et $8_3$ qui délivrent chacune un signal correspondant à l'une des trois couleurs fondamentales rouge, vert et bleu. Chaque sortie du décodeur 7 est connectée sur un tube cathodique $9_1$, $9_2$, $9_3$ ayant un écran coloré respectivement en rouge, vert et bleu.

L'écran de chaque tube cathodique est placé devant un objectif $10_1$, $10_2$, $10_3$ qui projette l'image vers l'écran 2 sur lequel les trois images en couleurs fondamentales se superposent.

En variante, le vidéo-projecteur peut comporter deux tubes cathodiques connectés sur la sortie $8_2$ qui délivre le signal correspondant à l'image verte et deux objectifs projetant sur l'écran une image verte.

En variante, le vidéo-projecteur peut être de tout autre type connu par exemple à cristaux liquides ou à valves de lumière.

Il est intéressant pour les exploitants de salles de spectacle équipées d'un vidéo-projecteur 4 de pouvoir projeter des programmes de télévision payants qui sont brouillés par le producteur et qui nécessitent la connaissance d'un code secret de décryptage pour faire disparaître le brouillage, ce moyen permettant à la chaîne qui diffuse un programme de se faire payer pour communiquer le code.

Les programmes payants peuvent être des émissions transmises par voie herzienne, notamment par satellite. Dans ce cas, le code varie fréquemment et selon les émissions.

Les programmes payants peuvent être également des enregistrements sur des bandes magnétiques et sur des vidéo-disques.

A ce jour, les éditeurs ou producteurs de programmes vidéo payants rechignent à vendre leurs programmes à des exploitants de salles de spectacle équipées d'un vidéo-projecteur.

En effet, le décryptage des émissions est réalisé à ce jour au moyen d'un appareil de décryptage qui comporte un clavier permettant d'introduire dans le décryptage le code payant du jour. Ce clavier doit donc être accessible et le décrypteur ainsi que la source de signaux vidéo qui peut être un poste de télévision ou un magnétoscope ou un vidéo-disque, sont situés dans un local accessible, généralement dans la cabine de projection 2.

In en résulte que les signaux vidéo et audio décryptés sont facilement accessibles à la sortie du décrypteur et les producteurs de programmes payants craignent légitimement qu'un exploitant de salle de spectacle ne puisse les enregistrer sur un magnétoscope pour obtenir frauduleusement des copies qui lui permettraient de faire plusieurs représentations successives d'un même programme en échappant aux redevances dues à l'auteur ou au producteur du programme.

Le problème à résoudre est donc de procurer un moyen qui permet de décrypter les signaux vidéo et audio et qui ne permet pas l'enregistrement des signaux décryptés ou qui rend cet enregistrement très difficile.

La figure 2 représente un dispositif selon l'invention permettant d'atteindre cet objectif.

Le boîtier 6 du vidéo-projecteur contient un décrypteur 11 de tout modèle connu, qui décrypte les signaux vidéo et audio. Ce décrypteur comporte

une entrée vidéo $12_1$ et une entrée audio $12_2$ qui sont connectées sur deux premières sorties vidéo et audio d'un commutateur 13 qui est par exemple un commutateur automatique.

Le décrypteur 11 comporte une sortie vidéo 14 qui est connectée sur l'entrée vidéo du décodeur 7 et qui envoie à celui-ci un signal vidéo multiplexé décrypté. Le décrypteur 11 comporte une sortie audio $14_2$ qui émet un son décrypté et qui est connectée sur un préamplificateur 15 dont la sortie est connectée par une ligne 16 à un amplificateur de puissance 17 qui se trouve dans un local technique.

Les sorties de l'amplificateur 17 sont connectées aux haut-parleurs 5 situés dans le local 1.

Le local technique 2 contient, en outre, une source vidéo et audio 18.

La figure 2 représente un exemple dans lequel la source 18 est un récepteur de télévision équipé d'une antenne 19. En variante, la source 18 peut être constituée par un lecteur de vidéo-disques ou par un magnétoscope ou par une caméra vidéo.

Un dispositif selon l'invention est conçu pour permettre de projeter sur l'écran 2 aussi bien des émissions brouillées que des émissions non brouillées et la source 18 peut donc être indifféremment une source de programmes brouillés ou non brouillés.

La source 18 comporte une sortie vidéo $20_1$ qui est connectée par une ligne 21 sur l'entrée audio du commutateur 13. La source 18 comporte une sortie audio $20_2$ qui est connectée sur un amplificateur 22, situé à proximité de la source. La sortie de l'amplificateur 22 est connectée par une ligne 23 sur l'entrée audio du commutateur 13.

L'amplificateur 22 est destiné à adapter l'impédance et à compenser la perte de puissance due à la longueur de la ligne 23 qui a plusieurs dizaines de mètres.

On a représenté sur la figure 2 une ligne 24 qui court-circuite l'amplificateur 22 pour montrer que l'on pouvait éventuellement supprimer l'amplificateur tampon 22, si l'impédance de la ligne 23 le permettait.

Le repère 25 représente un boîtier de télécommande qui comporte des touches ou un clavier permettant de composer le code secret qui permet le décryptage de l'émission. Le boîtier de télécommande 25 doit être facilement accessible par l'exploitant de la salle et il se trouve dans le local technique 2. Il est relié au vidéo-projecteur par une ligne 26. En variante, la liaison entre le boîtier 25 et le vidéo projecteur peut être une liaison par ondes porteuses, soit par ondes hertziennes ou infrarouges, soit par ultrasons.

Le commutateur 13 comporte une entrée 27 sur laquelle la ligne 26 est connectée.

On a vu qu'il comporte deux sorties vidéo et audio qui sont connectées respectivement aux entrées $12_1$ et $12_2$ du décrypteur et qui envoient vers celui-ci les signaux vidéo et audio cryptés. Le commutateur 13 comporte, en outre, une deuxième sortie vidéo $28_1$, qui est connectée à la ligne de sortie vidéo $14_1$ du décrypteur et une deuxième sortie audio $28_2$ qui est connectée à l'entrée de l'amplificateur 15.

Le fonctionnement est le suivant.

Les signaux vidéo et audio provenant de la source 18 arrivent séparément à l'entrée du commutateur automatique 13 qui les analyse pour déterminer s'ils sont brouillés ou non. On sait que le brouillage vidéo est obtenu généralement en décalant les impulsions de synchronisation des différentes lignes de l'image. Il suffit donc de mesurer la durée qui s'écoule entre les impulsions de synchronisation ligne successives pour déterminer s'il y a ou non un brouillage du signal vidéo.

Si l'émission est brouillée, le commutateur 13 aiguille automatiquement les signaux vidéo et audio vers les entrées $12_1$ et $12_2$ du décrypteur.

Si l'émission n'est pas brouillée, le commutateur 13 aiguille automatiquement les signaux vidéo et audio vers le décodeur 7 et vers l'amplificateur 15.

En variante, le commutateur 13 peut ne pas être automatique et l'aiguillage peut être commandé à distance à partir du boîtier de télécommande 25.

Lorsque le commutateur 13 est en position pour aiguiller les signaux vers les entrées $12_1$ et $12_2$ du décrypteur 11, il laisse passer vers le décrypteur le code de décryptage qu'il reçoit par la ligne 26 du boîtier de télécommande 25.

On voit que les signaux vidéo qui sortent par la sortie $14_1$ du décrypteur vont directement au décodeur 7 sans sortir du boîtier 6 du vidéo-projecteur qui est difficilement accessible lorsqu'il est suspendu au plafond.

On peut sceller ce boîtier de telle sorte qu'il est impossible de prélever le signal vidéo une fois décrypté pour en faire des copies.

## Revendications

1. Procédé pour projeter sur un écran (2) d'une salle de spectacle (1), au moyen d'un vidéo projecteur (4), des programmes de télévision nécessitant un décryptage, caractérisé en ce que l'on décrypte les signaux vidéo et audio au moyen d'un décrypteur (11) qui est placé à l'intérieur du boîtier (6) dudit vidéo projecteur et au moyen d'un boîtier de télécommande (25) qui permet d'envoyer les codes de décryptage audit décrypteur et qui est placé dans un endroit accessible (3).

2. Procédé selon la revendication 1, caractérisé en ce que l'on dispose ledit boîtier de télécommande (25), la source de programme de télévision (18) et un amplificateur de son (17) qui est relié aux haut-parleurs (5) de la salle, dans un local accessible (3) éloigné dudit vidéo-projecteur.

3. Dispositif destiné à projeter sur un écran (2) d'une salle de spectacle (1) des programmes de télévision qui peuvent nécessiter un décryptage, lequel dispositif comporte une source de programmes de télévision (18) et un vidéo-projecteur (4), caractérisé en ce que ledit vidéo-projecteur comporte un décrypteur (11) vidéo et audio qui est placé à l'intérieur du boîtier (6) dudit vidéo-projecteur, lequel boîtier peut être scellé.

4. Dispositif selon la revendication 3, caractérisé en ce qu'il comporte un boîtier de télécommande (25), équipé d'un clavier permettant de composer les codes de décryptage, lequel boîtier (25) est situé dans un local accessible (3) éloigné dudit vidéo-projecteur et est relié à celui-ci par un câble ou par une liaison par ondes porteuses ultrasonores, herziennes ou infrarouges.

5. Dispositif selon la revendication 4, caractérisé en ce que ledit vidéo-projecteur comporte, en outre, un commutateur (13) qui est associé audit décrypteur (11) et qui comporte deux entrées connectées respectivement à la sortie vidéo ($20_1$) et à la sortie audit ($20_2$) de ladite source de programmes (18), deux premières sorties connectées respectivement à l'entrée vidéo ($12_1$) et à l'entrée audio ($12_2$) dudit décrypteur et deux autres sorties connectées respectivement à la sortie vidéo ($14_1$) et à la sortie audio ($14_2$) dudit décrypteur.

6. Dispositif selon la revendication 5, caractérisé en ce que la sortie audit ($20_2$) de ladite source de programmes de télévision (18) est connectée sur un amplificateur tampon (22) dont la sortie est connectée audit commutateur (13) et la sortie audio ($14_2$) dudit décrypteur (11) est connectée sur un préamplificateur (15) qui est logé dans le boîtier (6) dudit vidéo-projecteur et la sortie dudit préamplificateur (15) est connectée par une ligne (16) à un amplificateur de puissance (17), qui alimente les haut-parleurs (5) de la salle et qui est logé dans ledit local (3).

Fig.1

Fig-2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | SMPTE JOURNAL, vol. 86, novembre 1977, pages 815-818, Scardale, US; B. MARTI: "New ancillary services using a television channel" <br> * Page 816, colonne de gauche, ligne 36 - page 817, colonne de gauche, ligne 5 * <br><br>--- | 1 | H 04 N 5/74 <br> H 04 N 7/16 |
| A | IEEE TRANSACTIONS ON CONSUMER ELECTRONICS, vol. CE-28, no. 3, août 1982, pages 220-224, IEEE, New York, US; E.S. KOHN: "Scrambling and cable-ready TV receivers" <br> * Page 222, colonne de droite, ligne 31 - page 223, colonne de gauche, ligne 12; page 223, colonne de gauche, ligne 47 - page 224, colonne de gauche, ligne 12; figures 5,7 * <br><br>--- | 1,4 | |
| A | TOUTE L'ELECTRONIQUE, vol. 460, janvier 1981, pages 29-30, Paris, FR; J.-J. POUBEAUD: "'Cryptage' du son pour la télévision à péage" <br> * Résumé * <br><br>----- | 1 | **DOMAINES TECHNIQUES RECHERCHES (Int. Cl.4)** <br><br> H 04 N |

Le présent rapport a été établi pour toutes les revendications

| Lieu de la recherche | Date d'achèvement de la recherche | Examinateur |
|---|---|---|
| LA HAYE | 08-04-1988 | KLUZ F.M. |